# EUROPÄISCHE PATENTSCHRIFT

(11) **EP 4 562 457 B1**
(45) Veröffentlichungstag und Bekanntmachung des Hinweises auf die Patenterteilung: **24.06.2026**
(21) Anmeldenummer: 22757559.4
(22) Anmeldetag: 26.07.2022
(51) Int. Cl.: G02B 5/00

(54) **ROTATIONSSYMMETRISCHE GEKRÜMMTE STRAHLFALLE FÜR KONISCHE STRAHLEN**
ROTATIONALLY SYMMETRICAL CURVED BEAM DUMP FOR CONICAL BEAMS
DÉCHARGE DE FAISCEAU INCURVÉ SYMÉTRIQUE EN ROTATION POUR FAISCEAUX CONIQUES

(43) Veröffentlichungstag der Anmeldung: 04.06.2025
(73) Patentinhaber: TRUMPF Lasersystems for Semiconductor Manufacturing GmbH, 71254 Ditzingen (DE)
(72) Erfinder: ERHARD, Steffen, 70825 Korntal-Münchingen (DE); KRAUß, Günther, 71088 Holzgerlingen (DE); BRUNNE, Jens, 70180 Stuttgart (DE)
(74) Vertreter: Trumpf Patentabteilung
(86) Internationale Anmeldenummer: PCT/EP2022/070931
(87) Internationale Veröffentlichungsnummer: WO 2024/022577

(56) Entgegenhaltungen:
- DE-A1- 102004 038 321
- DE-A1- 102008 041 706
- DE-A1- 102010 036 161
- DE-A1- 102016 002 128
- DE-A1- 102021 112 833
- FR-A1- 2 738 355
- US-A- 4 864 098
- US-A1- 2009 080 084
- US-A1- 2013 207 004
- US-B2- 10 345 561

## Beschreibung

### Hintergrund der Erfindung

Die Erfindung betrifft eine optische Strahlformanordnung für einen Lichtstrahl. Die Erfindung betrifft weiterhin ein Verfahren zum Betrieb einer solchen Strahlformanordnung.

Es ist bekannt, einen Lichtstrahl in einer Strahlfalle zu absorbieren. Es sind jedoch bislang keine optischen Aufbauten bekannt geworden, um energieintensive hohle und insbesondere konische Strahlen zuverlässig in einer besonders kompakten Optik zu absorbieren.

Die DE 10 2008 041 706 A1 beschreibt beispielsweise eine rotationssymmetrische Strahlfalle, allerdings können mit ihr keine besonders energieintensiven Strahlen absorbiert werden.

In der US 10 345 561 B2 ist eine Strahlfalle beschrieben, bei welcher zwei einander gegenüberliegende Flächen aufeinander zulaufen. Eine dieser Flächen ist hochreflektierend ausgestaltet, wohingegen die andere dieser beiden Flächen absorbierend ausgestaltet ist.

Die US 2013/207004 A1 beschreibt eine Spiegeleinheit für ein Kollektormodul für eine EUV-Lithografieanlage, welche vier paarweise einander gegenüberliegende und reflektive Flächen aufweist, wobei die paarweise gegenüberliegenden Flächen zumindest abschnittsweise einen Winkel einschließen.

Eine Strahlfalle für einen Hochleistungs-Laserstrahl beschreibt die US 4 864 098 A. Die Strahlfalle weist ein Kegelmittel zum Reflektieren und Ausbreiten des Hochleistungs-Laserstrahls nach außen von der Achse des Laserstrahls auf sowie ein Absorbermittel zum Absorbieren der Leistung des Strahls.

In der DE 10 2010 036 161 A1 ist eine rotationssymmetrische Strahlfalle beschrieben, welche einen Absorptionsraum aufweist, der von einer Längsachse radial nach außen hin in einer Strahlpropagationsrichtung enger wird.

Ferner beschreiben die US 2009/080084 A1, die DE 10 2004 038 321 A1, die DE 10 2016 002 128 A1 und die FR 2 738 355 A1 weitere bekannte Strahlfallen.

### Aufgabe der Erfindung

Es ist daher Aufgabe der Erfindung, eine kompakte optische Strahlformanordnung zur zuverlässigen Absorption eines konischen Lichtstrahls bereit zu stellen. Es ist weiterhin Aufgabe der Erfindung, ein Verfahren zum Betrieb einer solchen Strahlformanordnung bereit zu stellen.

### Beschreibung der Erfindung

Diese Aufgabe wird erfindungsgemäß gelöst durch eine Strahlformanordnung gemäß Anspruch 1 und ein Verfahren gemäß Anspruch 15. Die abhängigen Ansprüche geben bevorzugte Weiterbildungen wieder.

Die erfindungsgemäße Aufgabe wird somit gelöst durch eine Strahlformanordnung mit einem Absorber, der eine rotationssymmetrisch zu ihrer optischen Achse ausgebildete Strahlfalle zur Absorption eines Lichtstrahls aufweist. Die Strahlfalle weist eine von der optischen Achse abgewandte erste Absorptionsfläche und eine der optischen Achse zugewandte zweite Absorptionsfläche auf. Der zwischen den Absorptionsflächen ausgebildete Spalt verläuft zumindest abschnittsweise quer bzw. schräg zur optischen Achse und verengt sich für den einlaufenden Lichtstrahl zumindest abschnittweise zunehmend.

Der beschriebene Absorber weist somit einen rotationssymmetrischen, sich nicht parallel zur optischen Achse erstreckenden und sich verengenden Ringspalt auf, der auch hochenergetische konische Strahlen zuverlässig absorbiert. Das Strahlfallenmaterial der ersten Absorptionsfläche und/oder zweiten Absorptionsfläche ist absorbierend und vorzugsweise möglichst wenig streuend.

Vorzugsweise ist der Ringspalt endseitig geschlossen, d.h. die Absorptionsflächen sind - aus Sicht des in die Strahlfalle einlaufenden Lichtstrahls - endseitig miteinander verbunden. Hierdurch wird ein Austreten von Restlicht sicher vermieden.

Die zweite (radial äußere) Absorptionsfläche kann im durch die optische Achse verlaufenden Längsschnitt des Absorbers - aus Sicht des in die Strahlfalle einlaufenden Lichtstrahls - endseitig parabelförmig auf die erste Absorptionsfläche zulaufen. Dies ermöglicht eine besonders kompakte Ausbildung des Absorbers.

Die erste Absorptionsfläche und die zweite Absorptionsfläche können im durch die optische Achse verlaufenden Längsschnitt des Absorbers - aus Sicht des in die Strahlfalle einlaufenden Lichtstrahls - beständig aufeinander zulaufen, sodass sich die Strahlfalle für den in die Strahlfalle einlaufenden Lichtstrahl immer weiter verengt.

Die erste und/oder die zweite Absorptionsfläche (vorzugsweise beide Absorptionsflächen) kann/können im durch die optische Achse verlaufenden Längsschnitt des Absorbers - aus Sicht des in die Strahlfalle einlaufenden Lichtstrahls - zumindest abschnittsweise eine, insbesondere radial zunehmende, parabelförmige Krümmung aufweisen. Die erste Reflektion findet unter einem flachen Winkel statt. Dadurch wird nur wenig absorbiert und gestreut. Der Großteil der Absorption und damit auch der Streuung findet im Inneren des Ringspalts statt, von wo aus gestreutes Licht nicht direkt austreten kann. Der Auftreffwinkel des Lichtstrahls ist dort steil oder sogar senkrecht, was zu einer großen Absorption führt. Der in die Strahlfalle einlaufende Lichtstrahl wird häufig reflektiert, wobei sich der Einfallswinkel bei jeder Reflektion vergrößert, was zu einer besonders effektiven Absorption führt.

Um den Absorber noch kompakter ausbilden zu können, hat es sich gezeigt, dass es vorteilhaft ist, wenn die erste und/oder die zweite Absorptionsfläche im durch die optische Achse verlaufenden Längsschnitt des Absorbers - aus Sicht des in die Strahlfalle einlaufenden Lichtstrahls - eingangs einen linear verlaufenden Abschnitt aufweist/aufweisen.

In weiter bevorzugter Ausgestaltung der Strahlformanordnung ist der Absorber vollständig rotationssymmetrisch ausgebildet. Hierdurch kann der Absorber auf kostengünstige Art und Weise aus einem oder mehreren Drehteil(en) ausgebildet werden.

Besonders bevorzugt weist der Absorber zumindest zwei Bauteile auf, wobei ein erstes Bauteil die erste Absorptionsfläche und ein zweites Bauteil die zweite Absorptionsfläche aufweist. Hierdurch kann der Absorber fertigungstechnisch besonders einfach aus zumindest zwei Drehteilen gefertigt werden.

In besonders bevorzugter Ausgestaltung der Erfindung weist der Absorber eine rotationssymmetrisch zur optischen Achse der Strahlfalle ausgebildete Durchgangsausnehmung auf. Die Durchgangsausnehmung ist von einem vorwärtslaufenden Lichtstrahl durchquerbar. Gegenüber diesem vorwärtslaufenden Lichtstrahl ist der in die Strahlfalle einlaufende Lichtstrahl rückwärtslaufend. Die Strahlfalle erstreckt sich daher vorzugsweise zumindest teilweise, insbesondere vollständig, radial außerhalb der Durchgangsausnehmung. In diesem Fall erstreckt sich der Ringspalt der Strahlfalle mit einem größeren Durchmesser um die, insbesondere mittig durch den Absorber verlaufende, Durchgangsausnehmung.

Die Strahlfalle kann dabei für den rückwärtslaufenden Lichtstrahl mit der Durchgangsausnehmung verbunden sein, sodass der Eingangsbereich der Strahlfalle in die Durchgangsausnehmung mündet. Dies ermöglicht eine noch kompaktere Ausbildung des Absorbers.

Die Strahlformanordnung kann eine dem Absorber - aus Sicht des vorwärtslaufenden Lichtstrahls - nachgeordnete Blende aufweisen. Ein von der Blende reflektierter Lichtstrahl kann als rückwärtslaufender Lichtstrahl in die Strahlfalle eintreten. Eine solche Anordnung kann eingesetzt werden, um - im Falle eines Lichtstrahls in Form eines Laserstrahls - ein Selflasing, also ein ungewolltes Anschwingen eines Laservorgangs, zu verhindern.

Die Blende ist vorzugsweise - aus Sicht des vorwärtslaufenden Lichtstrahls - eingangs konisch ausgebildet. Hierdurch wird der an der Blende reflektierte Lichtstrahl zuverlässig in die Strahlfalle eingeleitet.

Um eine weiter vereinfachte Fertigung zu erreichen, kann die Blende separat zum Absorber ausgebildet sein.

Die Strahlformanordnung wird konstruktiv weiter vereinfacht, wenn die Blende und die Strahlfalle dieselbe optische Achse aufweisen.

Die Blende kann vollständig rotationssymmetrisch ausgebildet sein. Hierdurch kann die Blende aus einem oder mehreren Drehteil(en) ausgebildet werden.

Die Strahlformanordnung kann ein Zwischenstück zwischen dem Absorber und der Blende aufweisen. Das Zwischenstück kann eine - aus Sicht des vom Absorber zur Blende ausgestrahlten Lichtstrahls - zumindest abschnittsweise konisch ausgebildete Zwischenstück-Durchgangsausnehmung aufweisen.

Das Zwischenstück fungiert als Hilfsblende. Durch das Zwischenstück können vorwärtslaufende Lichtstrahlen, die nicht senkrecht auf die Blende auftreffen, als reflektierte rückwärtslaufende Lichtstrahlen zuverlässig in die Strahlfalle geleitet werden. Durch das Zwischenstück kann der in Richtung der optischen Achse benötigte Bauraum signifikant verkürzt werden.

Das Zwischenstück kann als separates Bauteil zur Blende und/oder als separates Bauteil zum Absorber ausgebildet sein. Hierdurch wird die Herstellung der Strahlformanordnung erleichtert.

Das Zwischenstück kann als Drehteil ausgebildet sein, um eine besonders kostengünstige Herstellung des Zwischenstücks zu ermöglichen.

Alternativ oder zusätzlich dazu kann das Zwischenstück dieselbe optische Achse aufweisen wie die Strahlfalle und/oder die Blende. Dies vereinfacht den Aufbau der Strahlformanordnung.

Die Strahlformanordnung kann ein dem Absorber vorgeordnetes, insbesondere elliptisches, vorzugsweise konisches, Axicon zur Erzeugung von konische Strahlen aufweisen. Das Axicon kann in Form eines Axicon-Teleskops ausgebildet sein.

Alternativ oder zusätzlich dazu kann die Strahlformanordnung eine dem Absorber vorgeordnete spiralförmige Phasenplatte aufweisen.

In einer besonders bevorzugten Ausgestaltung der Erfindung weist die Strahlformanordnung ein Targetmaterial, insbesondere in Form eines Zinntröpfchens, zur Erzeugung von EUV-Strahlung auf. Das Targetmaterial ist dabei durch einen vorwärtslaufenden Lichtstrahl bestrahlbar, der vorzugsweise zumindest den Absorber und die Blende durchquert hat.

Die Strahlformanordnung kann einen weiteren Absorber aufweisen, der aus Sicht des vorwärtslaufenden Lichtstrahls der Blende nachgeordnet ist. Der weitere Absorber ist dabei insbesondere so ausgerichtet, dass ein Lichtstrahl, der die Strahlformanordnung als rückwärtslaufender Strahl durchläuft, zunächst den weiteren Absorber durchläuft, dann an der Blende reflektiert wird, um dann in die Strahlfalle des weiteren Absorbers einzulaufen. Das ist insbesondere von Vorteil, wenn der vorwärtslaufende Lichtstrahl an dem Targetmaterial reflektiert wird und daraufhin als rückwärtslaufender Strahl die Strahlformanordnung durchläuft. Ein solcher rückwärtslaufender Strahl weist üblicherweise eine andere Kaustik auf als der vorwärtslaufende Strahl, so dass eine solche Strahlformanordnung mit zwei Absorbern und einer Blende zum einen verhindert, dass der rückwärtslaufende Strahl optische Elemente beschädigt, die der Strahlformanordnung aus Sicht des vorwärtslaufenden Strahls vorgelagert sind. Zum anderen kann mit einer solchen Strahlformanordnung der vorwärtslaufende Strahl mit Hilfe des aus Sicht des vorwärtslaufenden Strahls ersten Absorbers und der Blende justiert und von unerwünschten Strahlanteilen gereinigt werden. Die beiden Absorber sind vorzugsweise entlang der optischen Achse einander entgegengerichtet, insbesondere zueinander gespiegelt, orientiert.

Alle hier beschriebenen Bauteile können transmittiv und/oder reflektiv ausgeführt sein.

Die erfindungsgemäße Aufgabe wird weiterhin gelöst durch ein Verfahren zum Betrieb einer hier beschriebenen Strahlformanordnung, bei dem in die Strahlfalle ein Lichtstrahl in Form eines konischen Strahls einläuft.

Im Rahmen des Verfahrens passiert vorzugsweise ein vorwärtslaufender Lichtstrahl teilweise den Absorber und die Blende, wird teilweise reflektiert und als rücklaufender Lichtstrahl in der Strahlfalle absorbiert.

Als Lichtstrahl wird vorzugsweise ein Laserstrahl, insbesondere ein gepulster Laserstrahl, eingesetzt.

Besonders bevorzugt erzeugt der vorwärtslaufende Lichtstrahl EUV-Strahlung durch Bestrahlung des Targetmaterials.

Alle hier zur Strahlformanordnung beschriebenen Aspekte beziehen sich auch auf das hier beschriebene Verfahren und umgekehrt.

Weitere Vorteile der Erfindung ergeben sich aus der Beschreibung und der Zeichnung. Ebenso können die vorstehend genannten und die noch weiter ausgeführten Merkmale erfindungsgemäß jeweils einzeln für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

### Detaillierte Beschreibung der Erfindung und Zeichnung

- Fig. 1: zeigt schematisch eine Längsschnittansicht einer ersten Ausführungsform einer optischen Strahlformanordnung mit einem Absorber.
- Fig. 2: zeigt schematisch eine Längsschnittansicht einer zweiten Ausführungsform einer optischen Strahlformanordnung mit einem Absorber.
- Fig. 3: zeigt schematisch eine Längsschnittansicht einer dritten Ausführungsform einer optischen Strahlformanordnung mit einem Absorber und einer dem Absorber nachgeordneten Blende.
- Fig. 4: zeigt schematisch eine isometrische Ansicht einer vierten Ausführungsform einer optischen Strahlformanordnung mit einem Absorber.
- Fig. 5: zeigt schematisch eine Längsschnittansicht einer fünften Ausführungsform einer optischen Strahlformanordnung mit einem Absorber, einer dem Absorber nachgeordneten Blende und einem zwischen Absorber und Blende angeordneten Zwischenstück, wobei aus Fig. 5 weiterhin schematisch ein Target zur Erzeugung von EUV-Strahlung durch einen die vorgenannte Anordnung passierenden Lichtstrahl ersichtlich ist.
- Fig. 6: zeigt schematisch einen Längsschnitt einer sechsten Ausführungsform einer optischen Strahlformanordnung mit zwei Absorbern, zwischen denen eine Blende angeordnet ist, wobei aus Fig. 6 weiterhin schematisch ein Target zur Erzeugung von EUV-Strahlung ersichtlich ist.

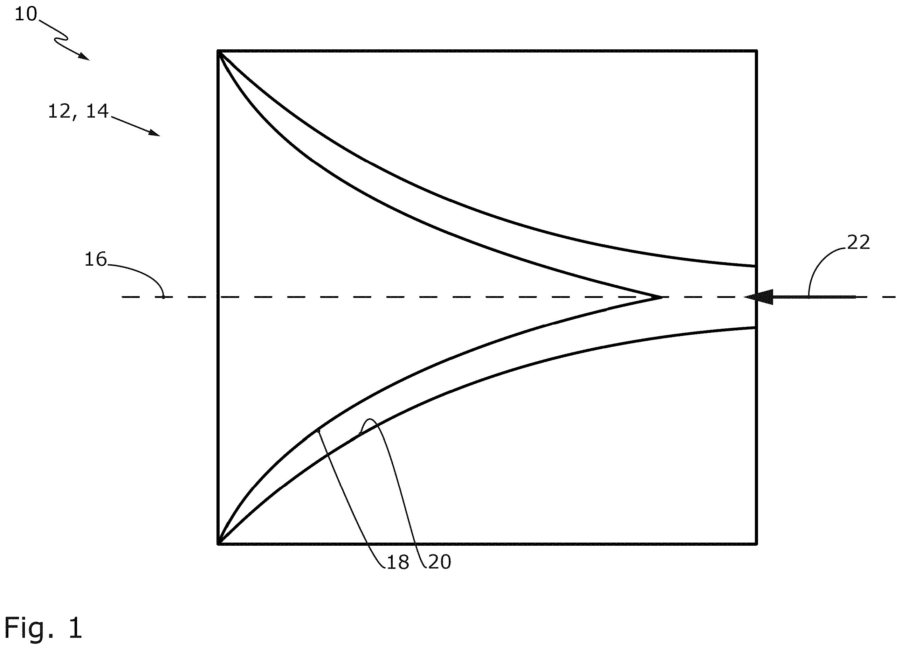

**Fig. 1** zeigt eine optische Strahlformanordnung **10** mit einem Absorber **12.** Der Absorber 12 weist eine Strahlfalle **14** auf, die rotationssymmetrisch zu ihrer optischen Achse **16** ausgebildet ist. Um die Fertigung des Absorbers 12, insbesondere als Drehteil, zu erleichtern, ist er insgesamt rotationssymmetrisch zur optischen Achse **16** ausgebildet.

Der Absorber 12 weist eine erste Absorptionsfläche **18** und eine zweite Absorptionsfläche **20** auf. Die Absorptionsflächen 18, 20 erstrecken sich zumindest abschnittsweise, hier vollständig, quer bzw. schräg zur optischen Achse 16. Die Absorptionsflächen 18, 20 sind endseitig miteinander verbunden und verlaufen jeweils insgesamt parabelförmig. Die Absorptionsflächen 18, 20 laufen beständig bzw. kontinuierlich aufeinander zu, sodass sich der Abstand der Absorptionsflächen 18, 20 zueinander zum Ende hin immer weiter verengt. Ein in die Strahlfalle 14 einlaufender Lichtstrahl **22** wird daher zuverlässig in der Strahlfalle 14 absorbiert. Der einlaufende Lichtstrahl 22 ist vorzugsweise in Form eines konischen Strahls ausgebildet, insbesondere in Form eines Laserstrahls.

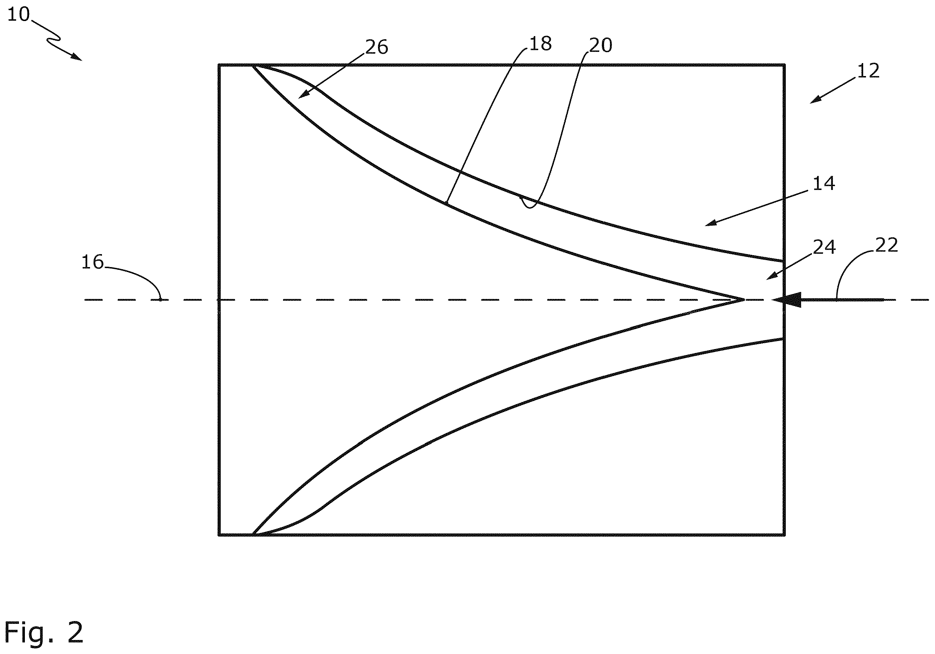

**Fig. 2** zeigt eine ähnlich ausgebildete Strahlformanordnung 10 für einen in eine Strahlfalle 14 einlaufenden Lichtstrahl 22. Ein Absorber 12 weist eine erste Absorptionsfläche 18 und eine zweite Absorptionsfläche 20 auf. Die zweite Absorptionsfläche 20 ist im Längsschnitt des Absorbers 12 im Eingangsbereich **24** des Lichtstrahls 22 gerade bzw. linear ausgebildet. Im Endbereich **26** der Strahlfalle 14 läuft die zweite Absorptionsfläche 20 im Längsschnitt parabelförmig auf die erste Absorptionsfläche 18 zu. Die in Fig. 2 gezeigte Ausführungsform des Absorbers 12 ist in Richtung der optischen Achse 16 besonders kompakt ausgebildet.

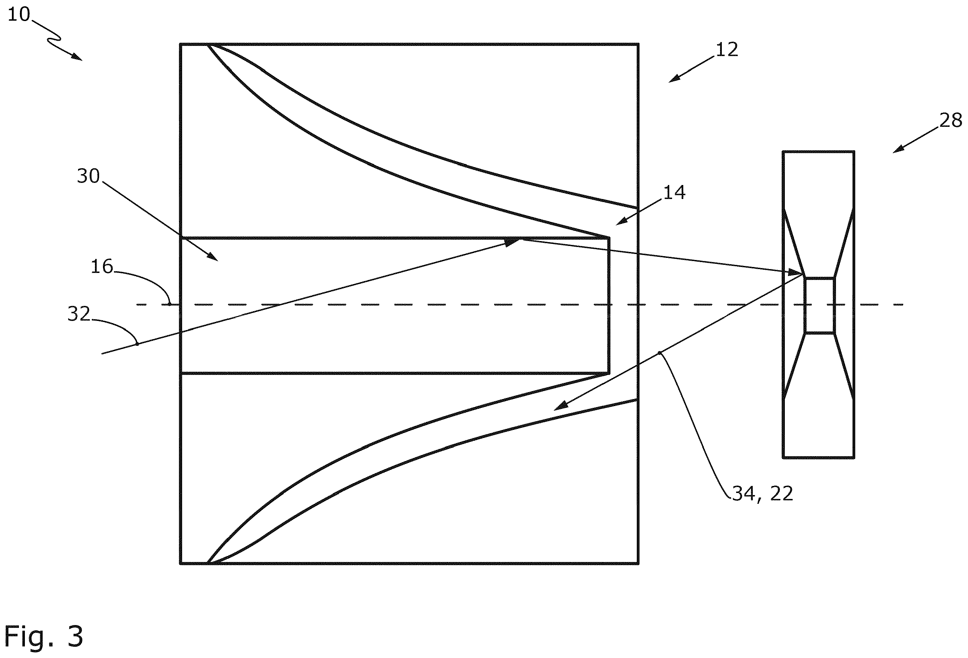

**Fig.** 3 zeigt eine weitere Variante einer Strahlformanordnung 10 mit einem Absorber 12 und einer Blende **28.** Im vorliegenden Fall weisen der Absorber 12 und die Blende 28 dieselbe optische Achse 16 auf.

Der Absorber 12 weist eine Durchgangsausnehmung **30** für einen vorwärtslaufenden Lichtstrahl **32** auf. Eine Strahlfalle 14 ist mit der Durchgangsausnehmung 30 verbunden.

Die Blende 28 ist aus Sicht des vorwärtslaufenden Lichtstrahls 32 eingangs konisch ausgebildet. Ein an der Blende 28 reflektierter rückwärtslaufender Lichtstrahl **34** ist ein in die Strahlfalle 14 einlaufender Lichtstrahl 22.

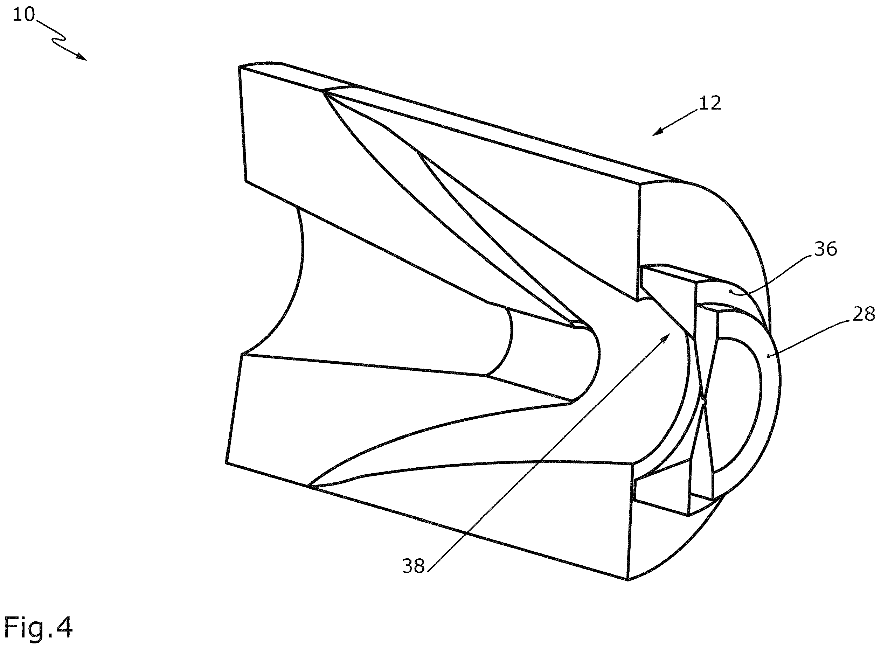

**Fig. 4** zeigt eine isometrische Darstellung eines ähnlichen Absorbers 12 einer Strahlformanordnung 10. Der Absorber 12 weist zwei vollständig rotationssymmetrischer Bauteile auf. Die Strahlformanordnung 10 weist weiterhin eine Blende 28 und ein zwischen Absorber 12 und Blende 28 angeordnetes Zwischenstück **36** auf. Das Zwischenstück 36 weist eine sich zur Blende 28 hin verengende konische Zwischenstück-Durchgangsausnehmung **38** auf. Das Zwischenstück 36 dient als Hilfsblende zur noch kompakteren Ausbildung der Strahlformanordnung 10.

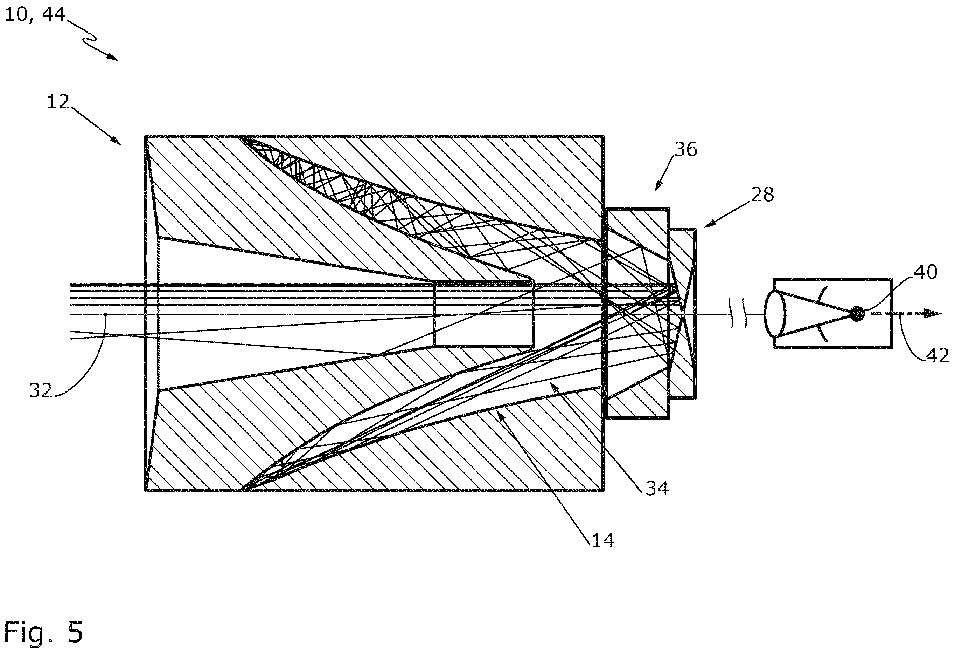

**Fig. 5** zeigt eine Strahlformanordnung 10 mit dem Absorber 12, dem Zwischenstück 36 und der Blende 28 gemäß Fig. 4. Ein vorwärtslaufender Lichtstrahl 32, hier in Form eines Laserstrahls, der die vorgenannten optischen Komponenten passiert hat, belichtet ein Targetmaterial **40,** hier in Form eines Zinntröpfchens, zur Erzeugung von EUV-Strahlung **42.**

In dem in Fig. 5 gezeigten Verfahren **44** wird ein an der Blende 28 reflektierter rückwärtslaufender Lichtstrahl 34 in der Strahlfalle 14 absorbiert, um Selflasing zu vermeiden.

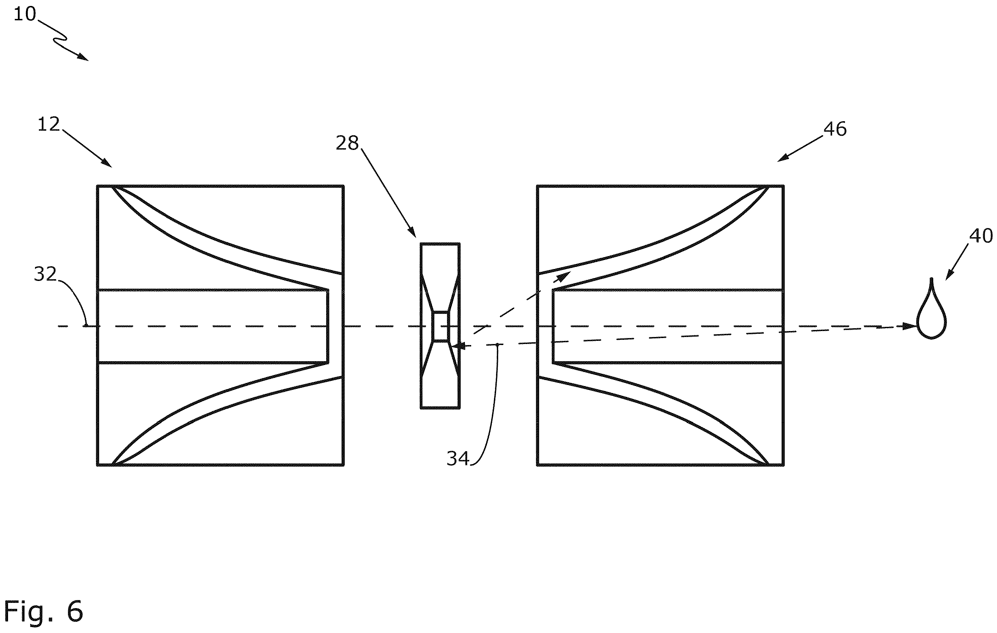

**Fig. 6** zeigt eine Strahlformanordnung 10 mit einem Absorber 12 und einem weiteren Absorber **46.** Der weitere Absorber 46 und der der Absorber 12 können gleich ausgebildet sein. Die beiden Absorber 12, 46 können gegensätzlich orientiert bzw. ausgerichtet sein. Zwischen den Absorbern 12, 46 kann eine Blende 28 angeordnet sein.

Ein vorwärtslaufender Laserstrahl 32 wird an einem Targetmaterial 40 reflektiert. Ein dabei entstehender rückwärtslaufender Laserstrahl 34 kann an der Blende 28 reflektiert und im weiteren Absorber 46 absorbiert werden.

Unter Vornahme einer Zusammenschau aller Figuren der Zeichnung betrifft die Erfindung zusammenfassend eine Strahlformanordnung 10 mit einem Absorber 12. Der Absorber 12 weist eine Strahlfalle 14 mit einer optischen Achse 16 auf. Die Strahlfalle 14 weist einen rotationssymmetrisch zur optischen Achse 16 ausgebildeten, sich vorzugsweise verengenden und sich radial nach außen erstreckenden Ringspalt auf. Besonders bevorzugt sind die einander zugewandten Absorptionsflächen 18, 20 des Ringspalts - im Längsschnitt durch die Strahlfalle 14 betrachtet - zumindest abschnittsweise, vorzugsweise überwiegend, parabelförmig ausgebildet. Der Absorber 12 kann eine Durchgangsausnehmung 30 zum Bestrahlen einer dem Absorber 12 nachgeordneten Blende 28 mit einem vorwärtslaufenden Lichtstrahl 32 aufweisen. Die Anordnung aus Absorber 12 und Blende 28 kann durch ein zwischen Absorber 12 und Blende 28 angeordnetes Zwischenstück 36 mit trichterförmiger Zwischenstück-Durchgangsausnehmung 38 verkürzt werden. Der vorwärtslaufende Lichtstrahl 32, hier in Form eines Laserstrahls, kann zur Bestrahlung von Targetmaterial 40 zur Erzeugung von EUV-Strahlung 42 eingesetzt werden.

### Bezugszeichenliste

- 10: Strahlformanordnung
- 12: Absorber
- 14: Strahlfalle
- 16: optische Achse der Strahlfalle 14
- 18: erste Absorptionsfläche
- 20: zweite Absorptionsfläche
- 22: in die Strahlfalle 14 einlaufender Lichtstrahl
- 24: Eingangsbereich des Lichtstrahls 22 in die Strahlfalle 14
- 26: Endbereich der Strahlfalle 14
- 28: Blende
- 30: Durchgangsausnehmung
- 32: vorwärtslaufender Lichtstrahl
- 34: rückwärtslaufender Lichtstrahl
- 36: Zwischenstück
- 38: Zwischenstück-Durchgangsausnehmung
- 40: Targetmaterial
- 42: EUV-Strahlung
- 44: Verfahren
- 46: weiterer Absorber

## Patentansprüche

1. Optische Strahlformanordnung (10) für einen Lichtstrahl (22), wobei die Strahlformanordnung (10) einen Absorber (12) mit einer rotationssymmetrisch zu ihrer optischen Achse (16) ausgebildeten Strahlfalle (14) zur Absorption des Lichtstrahls (22) aufweist,
wobei die Strahlfalle (14) eine radial von der optischen Achse (16) wegweisende erste Absorptionsfläche (18)
und radial weiter außen eine radial zur optischen Achse (16) hinweisende zweite Absorptionsfläche (20) aufweist,
wobei sich die erste Absorptionsfläche (18) und die zweite Absorptionsfläche (20) im durch die optische Achse (16) verlaufenden Längsschnitt des Absorbers (12) zumindest abschnittsweise schräg zur optischen Achse (16) erstrecken
und für den in die Strahlfalle (14) einlaufenden Lichtstrahl (22) zumindest abschnittsweise aufeinander zulaufen, sodass sich die Strahlfalle (14) für den Lichtstrahl (22) zumindest abschnittsweise verengt.

2. Strahlformanordnung nach Anspruch 1, bei der die erste Absorptionsfläche (18) und die zweite Absorptionsfläche (20) im durch die optische Achse (16) verlaufenden Längsschnitt des Absorbers (12) für den in die Strahlfalle (14) einlaufenden Lichtstrahl (22) endseitig miteinander verbunden sind.

3. Strahlformanordnung nach einem der vorhergehenden Ansprüche, bei der die zweite Absorptionsfläche (20) im durch die optische Achse (16) verlaufenden Längsschnitt des Absorbers (12) für den in die Strahlfalle (14) einlaufenden Lichtstrahl (22) endseitig parabelförmig auf die erste Absorptionsfläche (18) zuläuft.

4. Strahlformanordnung nach einem der vorhergehenden Ansprüche, bei der die erste Absorptionsfläche (18) und/oder die zweite Absorptionsfläche (20) im durch die optische Achse (16) verlaufenden Längsschnitt des Absorbers (12) für den in die Strahlfalle (14) einlaufenden Lichtstrahl (22) zumindest abschnittsweise eine radial zunehmende parabelförmige Krümmung aufweist/aufweisen.

5. Strahlformanordnung nach einem der vorhergehenden Ansprüche, bei der die erste Absorptionsfläche (18) und/oder die zweite Absorptionsfläche (20) im durch die optische Achse (16) verlaufenden Längsschnitt des Absorbers (12) für den in die Strahlfalle (14) einlaufenden Lichtstrahl (22) eingangs einen linear verlaufenden Abschnitt aufweist/aufweisen.

6. Strahlformanordnung nach einem der vorhergehenden Ansprüche, bei der der Absorber (12) vollständig rotationssymmetrisch ausgebildet ist.

7. Strahlformanordnung nach einem der vorhergehenden Ansprüche, bei der der Absorber (12) eine rotationssymmetrisch zur optischen Achse (16) ausgebildete Durchgangsausnehmung (30) zum Durchlaufen eines vorwärtslaufenden Lichtstrahls (32) durch den Absorber (12) aufweist, wobei sich die Strahlfalle (14) für den in die Strahlfalle (14) einlaufenden, rückwärtslaufenden Lichtstrahl (34) zumindest teilweise radial außerhalb der Durchgangsausnehmung (30) erstreckt.

8. Strahlformanordnung nach Anspruch 7, bei der die Strahlfalle (14) für den rückwärtslaufenden Lichtstrahl (34) eingangs mit der Durchgangsausnehmung (30) verbunden ist.

9. Strahlformanordnung nach Anspruch 7 oder 8, bei der die Strahlformanordnung (10) eine dem Absorber (12) für den vorwärtslaufenden Lichtstrahl (32) nachgeordnete Blende (28) aufweist, an der der vorwärtslaufende Lichtstrahl (32) zumindest teilweise reflektieren und als rückwärtslaufender Lichtstrahl (34) in den Absorber (12) eintreten kann.

10. Strahlformanordnung nach Anspruch 9, bei der die Blende (28) für den vorwärtslaufenden Lichtstrahl (32) eingangs konisch ausgebildet ist.

11. Strahlformanordnung nach einem der Ansprüche 9 oder 10, bei der die Blende (28) in einem separat zum Absorber (12) ausgebildeten Bauteil ausgebildet ist.

12. Strahlformanordnung nach einem der Ansprüche 9 bis 11, bei der die Blende (28) und der Absorber (12) dieselbe optische Achse (16) aufweisen.

13. Strahlformanordnung nach einem der Ansprüche 9 bis 12, bei der die Strahlformanordnung (10) ein Zwischenstück (36) aufweist, das zwischen dem Absorber (12) und der Blende (28) vorgesehen ist, wobei das Zwischenstück (36) zumindest abschnittsweise eine für den vorwärtslaufenden Lichtstrahl (32) konische Zwischenstück-Durchgangsausnehmung (38) aufweist.

14. Strahlformanordnung nach einem der vorhergehenden Ansprüche mit einem durch den vorwärtslaufenden Lichtstrahl (32) bestrahlbaren Targetmaterial (40) zur Erzeugung von EUV-Strahlung (42).

15. Verfahren (44) zum Betrieb einer Strahlformanordnung (10) nach einem der vorhergehenden Ansprüche mit einem in die Strahlfalle (14) einlaufenden Lichtstrahl (22) in Form eines konischen Strahls.

## Claims

1. An optical beam-forming arrangement (10) for a light beam (22), wherein the beam-forming arrangement (10) has an absorber (12) having a beam dump (14) designed to be rotationally symmetrical to its optical axis (16) for absorption of the light beam (22),
wherein the beam dump (14) has a first absorption face (18) facing radially away from the optical axis (16)
and further radially outward has a second absorption face (20) facing radially towards the optical axis (16),
wherein the first absorption face (18) and the second absorption face (20) extend, at least in sections, obliquely to the optical axis (16) in the longitudinal section of the absorber (12) passing through the optical axis (16)
and, for the light beam (22) entering the beam dump (14), converge at least in sections, so that the beam dump (14) narrows for the light beam (22) at least in sections.

2. The beam-forming arrangement according to claim 1, wherein, in the longitudinal section of the absorber (12) passing through the optical axis (16), the first absorption face (18) and the second absorption face (20) are connected at the end side for the light beam (22) entering the beam dump (14).

3. The beam-forming arrangement according to any of the preceding claims, wherein, in the longitudinal section of the absorber (12) passing through the optical axis (16), the second absorption face (20) tapers in an end-side parabolic manner towards the first absorption face (18) for the light beam (22) entering the beam dump (14).

4. The beam-forming arrangement according to any one of the preceding claims, wherein the first absorption face (18) and/or the second absorption face (20), in the longitudinal section of the absorber (12) passing through the optical axis (16), exhibit(s) a radially increasing parabolic curvature for the light beam (22) entering the beam dump (14) at least in sections.

5. The beam-forming arrangement according to any one of the preceding claims, wherein the first absorption face (18) and/or the second absorption face (20), in a longitudinal section of the absorber (12) passing through the optical axis (16), has/have, at the entrance side, a linearly extending section for the light beam (22) entering the beam dump (14).

6. The beam-forming arrangement according to any one of the preceding claims, wherein the absorber (12) is designed to be completely rotationally symmetrical.

7. The beam-forming arrangement according to any one of the preceding claims, wherein the absorber (12) has a through-opening (30), configured to be rotationally symmetrical with respect to the optical axis (16), for passage of a forward-running light beam (32) through the absorber (12), wherein the beam dump (14) for the backward-running light beam (34) entering the beam dump (14) extends at least partially radially outside the through-opening (30).

8. The beam-forming arrangement according to claim 7, wherein the beam dump (14) for the backward-running light beam (34) is connected to the through-opening (30) at the entrance.

9. The beam-forming arrangement according to claim 7 or 8, wherein the beam-forming arrangement (10) has a stop (28) downstream of the absorber (12) for the forward-running light beam (32), at which the forward-running light beam (32) can at least partially reflect and enter the absorber (12) as a backward-running light beam (34).

10. The beam-forming arrangement according to claim 9, wherein the stop (28) for the forward-running light beam (32) is conical at the entrance.

11. The beam-forming arrangement according to any one of claims 9 or 10, wherein the stop (28) is formed in a component formed separately from the absorber (12).

12. The beam-forming arrangement according to any one of claims 9 to 11, wherein the stop (28) and the absorber (12) have the same optical axis (16).

13. The beam-forming arrangement according to any one of claims 9 to 12, wherein the beam-forming arrangement (10) has an intermediate piece (36) provided between the absorber (12) and the stop (28), wherein the intermediate piece (36) has a conical intermediate piece through-opening (38) for the forward-running light beam (32) at least in sections.

14. The beam-forming arrangement according to any one of the preceding claims with a target material (40) that can be irradiated by the forward-running light beam (32) for generating EUV radiation (42).

15. A method (44) for operating a beam-forming arrangement (10) according to any one of the preceding claims with a light beam (22) entering the beam dump (14) in the form of a conical beam.

## Revendications

1. Ensemble de mise en forme de faisceau (10) optique pour un faisceau lumineux (22), l'ensemble de mise en forme de faisceau (10) présentant un absorbeur (12) comportant un piège à faisceau (14) conçu de manière symétrique en rotation par rapport à son axe optique (16) pour l'absorption du faisceau lumineux (22),
le piège à faisceau (14) présentant une première surface d'absorption (18) pointant radialement à l'opposé de l'axe optique (16)
et présentant, radialement plus à l'extérieur, une seconde surface d'absorption (20) pointant radialement vers l'axe optique (16),
la première surface d'absorption (18) et la seconde surface d'absorption (20) s'étendant, au moins par sections obliquement à l'axe optique (16) dans la section longitudinale de l'absorbeur (12) passant par l'axe optique (16)
et convergeant l'une vers l'autre, au moins par sections, pour le faisceau lumineux (22) entrant dans le piège à faisceau (14), de telle sorte que le piège à faisceau (14) se rétrécisse au moins par sections pour le faisceau lumineux (22).

2. Ensemble de mise en forme de faisceau selon la revendication 1, dans lequel la première surface d'absorption (18) et la seconde surface d'absorption (20) sont reliées bout à bout dans la section longitudinale de l'absorbeur (12) passant par l'axe optique (16) pour le faisceau lumineux (22) entrant dans le piège à faisceau (14).

3. Ensemble de mise en forme de faisceau selon l'une quelconque des revendications précédentes, dans lequel la seconde surface d'absorption (20) dans la section longitudinale de l'absorbeur (12) passant par l'axe optique (16), converge de manière parabolique à son extrémité vers la première surface d'absorption (18) pour le faisceau lumineux (22) entrant dans le piège à faisceau (14).

4. Ensemble de mise en forme de faisceau selon l'une quelconque des revendications précédentes, dans lequel la première surface d'absorption (18) et/ou la seconde surface d'absorption (20) présente/présentent, dans la section longitudinale de l'absorbeur (12) passant par l'axe optique (16), une courbure parabolique radialement croissante au moins par sections, pour le faisceau lumineux (22) entrant dans le piège à faisceau (14).

5. Ensemble de mise en forme de faisceau selon l'une quelconque des revendications précédentes, dans lequel la première surface d'absorption (18) et/ou la seconde surface d'absorption (20) présente/présentent d'abord une section s'étendant de manière linéaire dans la section longitudinale de l'absorbeur (12) passant par l'axe optique (16) pour le faisceau lumineux (22) entrant dans le piège à faisceau (14).

6. Ensemble de mise en forme de faisceau selon l'une quelconque des revendications précédentes, dans lequel l'absorbeur (12) est conçu complètement symétrique en rotation.

7. Ensemble de mise en forme de faisceau selon l'une quelconque des revendications précédentes, dans lequel l'absorbeur (12) présente un évidement traversant (30) conçu symétrique en rotation par rapport à l'axe optique (16) pour qu'un faisceau lumineux se déplaçant vers l'avant (32) puisse traverser l'absorbeur (12), dans lequel le piège à faisceau (14) pour le faisceau lumineux se déplaçant vers l'arrière (34) entrant dans le piège à faisceau (14) s'étend au moins partiellement radialement à l'extérieur de l'évidement traversant (30).

8. Ensemble de mise en forme de faisceau selon la revendication 7, dans lequel le piège à faisceau (14) pour le faisceau lumineux se déplaçant vers l'arrière (34) est d'abord relié à l'évidement traversant (30).

9. Ensemble de mise en forme de faisceau selon la revendication 7 ou 8, l'ensemble de mise en forme de faisceau (10) présentant un diaphragme (28) en aval de l'absorbeur (12) pour le faisceau lumineux se déplaçant vers l'avant (32), sur lequel le faisceau lumineux se déplaçant vers l'avant (32) peut au moins partiellement se réfléchir et entrer dans l'absorbeur (12) sous la forme d'un faisceau lumineux se déplaçant vers l'arrière (34).

10. Ensemble de mise en forme de faisceau selon la revendication 9, dans lequel le diaphragme (28) pour le faisceau lumineux se déplaçant vers l'avant (32) est d'abord conçu de forme conique.

11. Ensemble de mise en forme de faisceau selon l'une quelconque des revendications 9 ou 10, dans lequel le diaphragme (28) est conçu dans un composant conçu séparément de l'absorbeur (12).

12. Ensemble de mise en forme de faisceau selon l'une quelconque des revendications 9 à 11, dans lequel le diaphragme (28) et l'absorbeur (12) présentent le même axe optique (16).

13. Ensemble de mise en forme de faisceau selon l'une quelconque des revendications 9 à 12, l'ensemble de mise en forme de faisceau (10) présentant une pièce intermédiaire (36) qui est prévue entre l'absorbeur (12) et le diaphragme (28), la pièce intermédiaire (36) présentant, au moins par sections, un évidement traversant de pièce intermédiaire conique (38) pour le faisceau lumineux se déplaçant vers l'avant (32).

14. Ensemble de mise en forme de faisceau selon l'une quelconque des revendications précédentes comportant un matériau cible (40) qui peut être irradié par le faisceau lumineux se déplaçant vers l'avant (32) pour générer un rayonnement UVE (42).

15. Procédé (44) permettant de faire fonctionner un ensemble de mise en forme de faisceau (10) selon l'une quelconque des revendications précédentes comportant un faisceau lumineux (22) entrant dans le piège à faisceau (14) sous la forme d'un faisceau conique.
